# EUROPÄISCHE PATENTSCHRIFT

(11) **EP 0 893 379 B1**
(45) Veröffentlichungstag und Bekanntmachung des Hinweises auf die Patenterteilung: **10.11.1999**
(21) Anmeldenummer: 98111296.4
(22) Anmeldetag: 19.06.1998
(51) Int. Cl.: B65G 57/00, B65G 57/24

(54) **Palettiervorrichtung**
Palletizer
Dispositif de palettisation

(30) Priorität: 26.07.1997 DE 19732243
(43) Veröffentlichungstag der Anmeldung: 27.01.1999
(73) Patentinhaber: Langhammer, Heinrich, D-67304 Eisenberg (DE)
(72) Erfinder: Langhammer, Heinrich, D-67304 Eisenberg (DE)
(74) Vertreter: Zellentin, Wiger, Dipl.-Ing.

(56) Entgegenhaltungen:
- DE-A- 3 627 577

## Beschreibung

Die vorliegende Erfindung betrifft eine Palettiervorrichtung gemäß dem Oberbegriff des Hauptanspruchs. Mit Hilfe derartiger Palettiervorrichtungen werden meist verpackte Gegenstände in Form von beliebig ausgerichteten Lagen übereinander auf Paletten gestapelt. Um die Lagen zu stabilisieren, wird auf diese ein Zwischenlagepapier gelegt. Dieses wird von einem seitlich der Förderbahn angeordneten Papiermagazin übergeben, siehe z. B. DE 38 13 729 A1, DE 42 07 808 A1 sowie Prospekt C 01-22 DE "Sack-Palettomat, Typ S 800 bis S 2500, Harry Lässig GmbH & Co., Hamburg. Die seitliche Anordnung des Magazins verstellt jedoch den Raum neben der Förderbahn.

Die DE 36 27 577 C2 zeigt daher eine Lösung, bei welcher das Magazin unterhalb des Schiebebodens angeordnet ist, wobei dieser Sauger aufweist, die das Papier mitnehmen, um dieses gleichzeitig mit dem Abschieben der neuen Lage freizugeben.

Die Papierübergabe an den Sauger geschieht dabei durch Schwenken des Magazins, welches über einen unterhalb des Magazins angeordneten Hubzylinder angehoben wird, gegenüberliegend befindet sich ein Drehlager.

Bei dieser Ausführungsform wird die Palette zum Aufschieben der Lagen angehoben und danach lagenweise abgesenkt. Das Magazin ist ebenfalls seitlich zur Rollenbahn angeordnet.

Die Aufgabe der vorliegenden Erfindung besteht daher darin, die Papierzustellung derart zu modifizieren, daß diese über der Rollenbahn angebracht werden kann und dennoch insbesondere die erste Lage auf die Palette geschoben werden kann, ohne diese anheben zu müssen.

Die Lösung dieser Aufgabe gelingt mit einer die Merkmale des Hauptanspruchs aufweisenden Palettiervorrichtung, eine vorteilhafte Ausgestaltung ist im Unteranspruch wiedergegeben.

Die Paletten gelangen auf Rollen zur Palettierstation und die Lagen des Stapels werden mit Hilfe von Abstreifern von einem verfahrbaren Schiebeboden auf die Palette abgeschoben. Der Schiebeboden weist an seiner zur Palette hin gerichteten Vorderkante eine Ausnehmung auf. In der Ausnehmung sind ein oder mehrere schwenkbare Sauger angeordnet, die bei eingeschwenkter Position in der Ausnehmung liegen und bei ausgeschwenkter Position die Unterkante des Schiebebodens nach unten überragen. Unterhalb des Schiebebodens befindet sich eine Papierplattform, auf der die Papierbögen ablegbar sind, und die Papierplattform hängt höhenverschieblich in Führungsstäben. Die Führungsstäbe sind dabei derart angeordnet, daß sie zwischen die Lücken der Rollen absenkbar sind, so daß sich beim Absenken des Schiebebodens nach dem Auflegen der Papierplattform diese auf den oder die Sauger bis in deren Wirkungsbereich zubewegt, und der Schiebeboden ist gegenüber der Papierplattform horizontal verfahrbar.

Diese Lösung ist deswegen so vorteilhaft, weil zum einen der bisher schon verwendete Schiebeboden nur geringfügig abgeändert zu werden braucht, d. h. in diesen wird zur Aufnahme des Saugers eine Ausnehmung angebracht, so daß dieser gleichzeitig mit dem Transport der nächsten Lage auch imstande ist, das Zwischenlagepapier abzulegen und derart ein separater Arbeitstakt entfällt. Da der Sauger in ausgeschwenktem Zustand zum Ergreifen und Halten des Papiers die Unterkante des Schiebebodens nur wenig überragt, ist auch ein höheres Anheben der Hubplattform, an der der Schiebeboden gehalten ist, grundsätzlich nicht erforderlich.

Die Papierplattform besitzt etwa die Höhe der Palette, auf deren Niveau der Schiebeboden ohnehin abzusenken ist, um die angeforderte Lage zu übernehmen. Dieser beim Stand der Technik freie Raum zwischen den Rollen für die Palette und der Unterkante des Schiebebodens dient zur Aufnahme und Übergabe des Papiervorrates. Die Papierplattform, auf der der Vorrat liegt, ist an Führungsstäben lotrecht verschieblich gehalten. Zur Übergabe des obersten Papierbogens wird zunächst der Schiebeboden vom Niveau der Übernahme der neuen Lage soweit abgesenkt, bis die Papierplattform auf den Rollen für die Palettenzustellung aufliegt. Die Papierplattform berührt hierbei die Führungsstäbe von oben, die hierbei über den Lücken zwischen den Rollen positioniert sind und drückt diese soweit nach unten, bis der Sauger das oberste Papier ergreift, was durch entsprechende Sensoren ausgelöst werden kann, d. h. der Schiebeboden läßt sich bis unmittelbar auf die Papierplattform absenken.

Zum Ablegen des Papiers wird der Unterdruck an der Saugdüse unterbrochen, diese in die Ausnehmung des Schiebebodens zurückgeschwenkt, und dieser unter Ablegen der auf ihm befindlichen Lage in die Ausgangsstellung über die Papierplattform zurückgefahren.

Anhand der beiliegenden Figuren wird die vorliegende Erfindung näher erläutert.

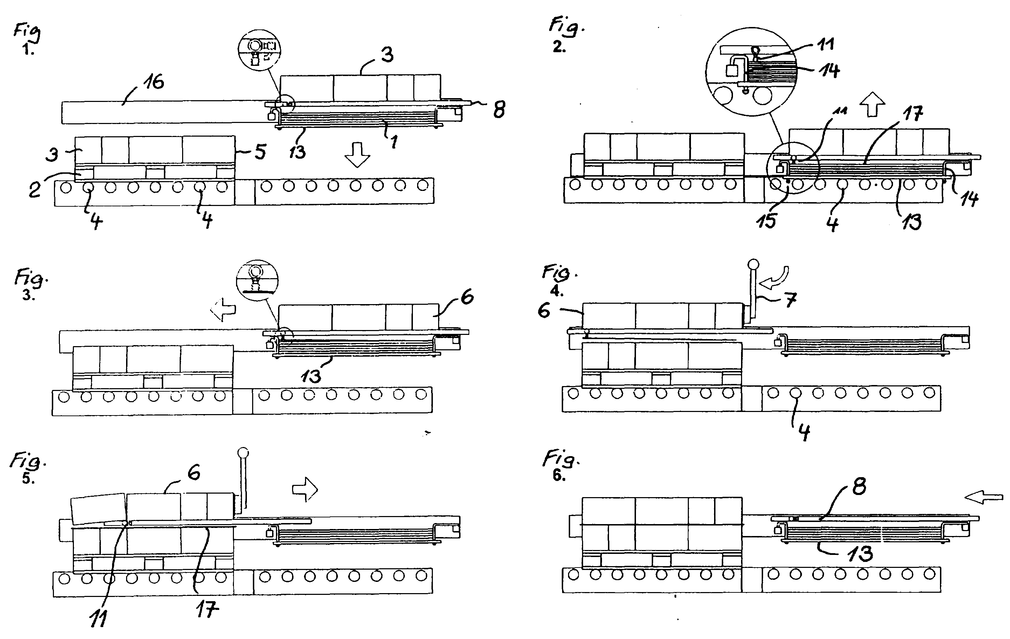

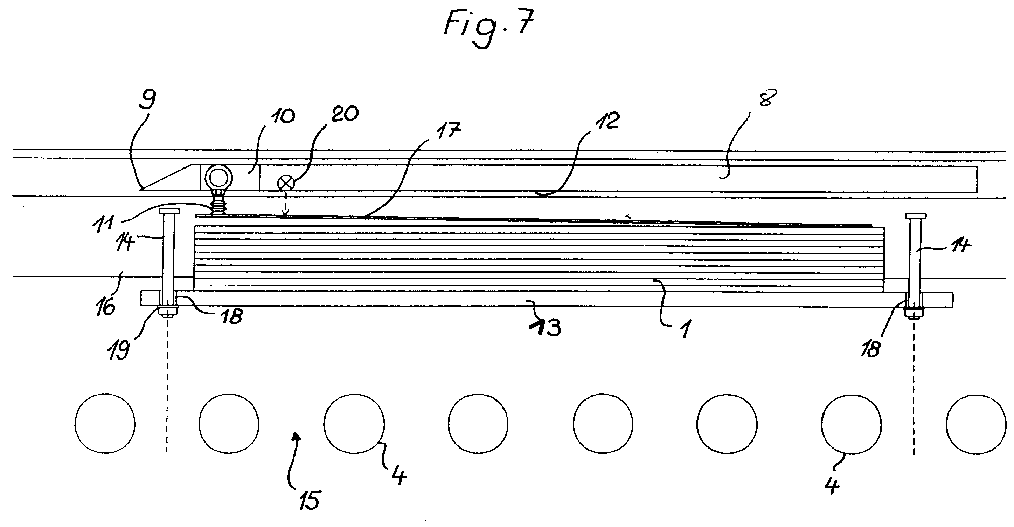

Dabei zeigen die Figuren 1 bis 6 den Ablauf des Lagestapelns und Figur 7 den Schiebeboden mit der Papierplattform in vergrößerter Darstellung.
In **Figur 1** liegt die Palette 2 auf den Rollenbahntragrollen 4, über die sie zum Lagestapeln gefahren wird. Auf der Palette befindet sich eine Lage 5 aus zueinander ausgerichteten Einheiten 3 von z. B. Küchenpapierrollen. Oberhalb der Palette 2 ist der Lagenhub 16 angeordnet, der Führungsmittel für das Verfahren des Schiebebodens 8 aufweist. Der Schiebeboden 8 ist angehoben, auf ihm liegt eine Lage 6 aus den nächsten auf die Lage 5 abzuschiebenden Einheiten 3. Unterhalb des Schiebebodens 8 ist die Papierplattform 13 mit dem Papiervorrat 1 angeordnet und mit dieser vertikal verfahrbar.
**Figur 2** zeigt den Lagenhub 16 abgesenkt auf die Tragrollen 4. Das Beladen des Schiebebodens kann in dieser oder der in Figur 1 gezeigten Position erfolgen. Die Papierplattform 13 liegt auf den Rollen 4, der Schiebeboden drückt die Führungsstäbe 14 nach unten, soweit in die Lücken 15 zwischen den Rollen 4 bis der Sauger 11 das obere Lagenpapier 17 ergreift und durch Unterdruck festhält.
In **Figur 3** ist der Lagenhub 16 zusammen mit dem Schiebeboden 8 und der Papierplattform 13 wieder hochgefahren.
In **Figur 4** ist der Schiebeboden 8 über die Lage 5 gefahren, der Schiebeboden 8 hat das Lagenpapier 17 mitgenommen und ebenfalls über die Lage 5 gebracht.
   Die Papierplattform 13 verbleibt lotrecht über ihren Tragrollen 4.
In **Figur 5** wird der Schiebeboden 8 wieder zurückgefahren, der Sauger 11 ist in seine Ausnehmung 10 (Fig. 7) eingeschwenkt, wobei (vorher) der an ihm anliegende Unterdruck beendet wurde. Der Abstreifer 7 verbleibt an der Lage 6 beim Zurückziehen des Schiebebodens 8, die sich dabei auf das Lagenpapier 17 legt.
In **Figur 6** befindet sich der Schiebeboden 8 wieder über der Papierplattform 13 in der Ausgangsstellung zur Übernahme der nächsten Lage.
**Figur 7** zeigt in gegenüber den vorigen in vergrößerter Darstellung oberhalb der Tragrollen 4 die Papierplattform 13. Diese weist beidendig je zwei Bohrungen 18 auf, die von den Führungsstäben 14 durchgriffen werden, die oben am Lagenhub 16 befestigt sind und an ihrem unteren Ende Auflager 19 besitzen, auf denen die Papierplattform aufliegt. Die Führungsstäbe 14 weisen gegenüber den Bohrungen 18 ein (geringfügiges) Untermaß auf, so daß diese in der Papierplattform 13 gleiten können. Durch die Strichlierung in Verlängerung der Mittelachse der Führungsstäbe 14 ist angedeutet, daß letztere beim Absenken des Lagenhubes 16 in die Lücken 15 zwischen den Tragrollen 4 gelangen.

Der Schiebeboden 12 kann zwischen die Führungsstäbe 14 auf das obere Lagenpapier 17 soweit abgesenkt werden, daß der Sauger 11 dieses ansaugen und abheben kann. Der Sauger 11 überragt die Unterkante 12 des Schiebebodens nach unten, er ist in einer Ausnehmung 10 des Schiebebodens 8 nahe dessen Vorderkante 9 schwenkbar gehalten. Unweit des Saugers 11 befindet sich ein Sensor 20, der das Abheben des jeweils oberen Lagepapiers 17 überwacht bzw. steuert.

### Bezugszeichenliste

- 1: Zwischenlagepapier
- 2: Palette
- 3: Einheiten
- 4: Rollenbahntragrolle
- 5, 6: Lagen
- 7: Abstreifer
- 8: Schiebeboden
- 9: Vorderkante Schiebeboden
- 10: Ausnehmung
- 11: Sauger
- 12: Unterkante Schiebeboden
- 13: Papierplattform
- 14: Führungsstäbe
- 15: Lücken
- 16: Lagenhub
- 17: oberstes Lagenpapier
- 18: Bohrungen
- 19: Auflager
- 20: Sensor

## Patentansprüche

1. Palettiervorrichtung für Zwischenlagepapiere (1) aufweisende, auf Paletten (2) abzulegende Stapel von Einheiten (3), wobei die Paletten (2) auf voneinander beabstandeten Rollen (4) zur Palettierstation gelangen und die Lagen (5, 6) des Stapels mit Hilfe von Abstreifern (7) von einem verfahrbaren Schiebeboden (8) auf die Palette (2) abgeschoben werden, wobei sich unterhalb des Schiebebodens (8) eine Papierplattform (13) befindet, auf der die Zwischenlagepapiere (1) ablegbar sind und der Schiebeboden (8) gegenüber der Papierplattform (13) horizontal verfahrbar ist und unterhalb des Schiebebodens (8) Sauger (11) zur Aufnahme einzelner Zwischenlagepapiere (1) angeordnet sind, **dadurch gekennzeichnet**, daß der Schiebeboden (8) an seiner zur Palette (2) hin gerichteten Vorderkante (9) eine Ausnehmung (10) aufweist, in welcher der oder die Sauger (11) schwenkbar gehalten sind und welche bei eingeschwenkter Position in der Ausnehmung (10) liegen und bei ausgeschwenkter Position die Unterkante (12) des Schiebebodens (8) nach unten überragen, wobei die Plattform (13) höhenverschieblich in Führungsstäben (14) hängt und die Führungsstäbe derart angeordnet sind, daß sie zwischen die Lücken (15) der Rollen (4) absenkbar sind während die Papierplattform (13) auf den Rollen (4) zu liegen kommt, so daß beim gemeinsamen Absenken des Schiebebodens (8) und der Papierplattform (13) und bei in senkrechte Stellung geschwenkten Saugern (11) diese das Zwischenlagepapier (1) ergreifen können.

2. Palettiervorrichtung nach Anspruch 1, **dadurch gekennzeichnet**, daß der Schiebeboden (8) an einem senkrecht beweglichen Lagenhub (16) zu verschieben ist, an dem die Papierplattform (13) beweglich angeordnet ist.

## Claims

1. Palletizing device for stacks of units (3) having interleaving papers (1) to be laid on pallets (2), whereby the pallets (2) pass on rollers (4) distanced from one another to the palletizing station and the layers (5, 6) of the stack are pushed off on to the pallet (2) with the help of strippers (7) from a travelling sliding bottom (8), whereby, below the sliding bottom (8), is present a paper platform (13) on which the interleaving papers (1) can be laid and the sliding bottom (8) is horizontally travellable with regard to the paper platform (13) and, below the sliding bottom (8), suction devices are arranged for the take up of individual interleaving papers (1), characterised in that the sliding bottom (8) has, on its front edge (9) directed towards the pallet (2), a recess (10) in which the suction device or suction devices is or are tiltably held and which, in the tilted in position, lie in the recess (10) and, in the tilted out position, downwardly project over the lower edge (12) of the sliding bottom (8), whereby the platform (13) hangs upwardly displaceably in guide rods (14) and the guide rods are arranged in such a manner that they can be lowered between the gaps (15) of the rollers (4) while the paper platform (13) comes to lie on the rollers (4) so that in the case of the combined lowering of the sliding bottom (8) and of the paper platform (13) and in the case of the vertical position of the tilted suction devices (11), these can grip the interleaving paper (1).

2. Palletizing device according to claim 1, characterised in that the sliding bottom (8) is to be moved on a vertically movable layer pusher (16) on which the paper platform (13) is movably arranged.

## Revendications

1. Dispositif de palettisation pour pile à enlever sur palettes (2), présentant une couche intermédiaire de papier (1), les palettes (2) parvenant à la station de palettisation sur des rouleaux (4) distant les uns des autres et les couches (5, 6) de la pile étant poussées à l'aide d'un racloir (7) d'un fond mobile (8) déplaçable sur la palette (2), une plate-forme papier (13) se trouvant en-dessous du fond mobile (8) sur laquelle les couches intermédiaires de papier (1) sont déposables et le fond mobile (8) étant horizontalement déplaçable en face de la plate-forme papier (13) et des têtes aspirantes (11) étant disposées en-dessous du fond mobile (8) pour la prise des couches intermédiaires de papier (1), caractérisé en ce que le fond mobile (8) présente un creux (10) sur sa face avant (9) dirigée vers la palette (2), dans lequel la ou les têtes aspirante(s) (11) sont maintenues de manière orientable et qui, en position relevée, sont dans le creux (10) et, en position abaissée, font saillie vers le bas de la face inférieure (12) du fond mobile (8), la plate-forme (13) étant suspendue de manière réglable en hauteur dans les barres de guidage (14) et les barres de guidage étant disposées de manière à pouvoir être abaissées entre les trous (15) des rouleaux (4), alors que la plate-forme papier (13) vient se poser sur les rouleaux (4), de sorte que, lors de l'abaissement simultané du fond mobile (8) et de la plate-forme papier (13), et lorsque les têtes aspirantes (11) sont inclinées en position verticale, ces derniers peuvent saisir la couche intermédiaire de papier (1).

2. Dispositif de palettisation selon la revendication 1, caractérisé en ce que le fond mobile (8) doit être déplacé sur un élévateur de couche (16) déplaçable verticalement contre lequel la plate-forme papier (13) est disposée de façon mobile.
